# EUROPEAN PATENT SPECIFICATION

(11) **EP 3 917 826 B1**
(45) Date of publication and mention of the grant of the patent: **29.11.2023**
(21) Application number: 20701911.8
(22) Date of filing: 31.01.2020
(51) Int. Cl.: B63C 11/48, B63G 8/00, B64C 39/02

(54) **SYSTEM AND METHOD FOR RELEASING AND RETRIEVING AN AUV USING A UAV**
SYSTEM UND VERFAHREN ZUM FREIGEBEN UND WIEDERAUFFINDEN EINES AUV MITHILFE EINES UAV
SYSTÈME ET PROCÉDÉ DE LIBÉRATION ET DE RÉCUPÉRATION D'UN VÉHICULE SOUS-MARIN AUTONOME À L'AIDE D'UN VÉHICULE AÉRIEN SANS PILOTE

(30) Priority: 01.02.2019 NO 20190136
(43) Date of publication of application: 08.12.2021
(73) Proprietor: Birdview AS, 0694 Oslo (NO)
(72) Inventor: SHARIFFIASL, Pouyan, 1591 SPERREBOTN (NO)
(74) Representative: Onsagers AS
(86) International application number: PCT/EP2020/052476
(87) International publication number: WO 2020/157303

(56) References cited:
- JP-A- 2017 024 630
- US-A1- 2018 284 575
- US-A1- 2018 370 604
- US-B1- 9 580 173

## Description

### Technical field

The present invention regards a system and method for underwater operations, and more particularly a system and method for underwater operations using an Unmanned Aerial Vehicle (UAV) with an Autonomous Underwater Vehicle (AUV) attached that can be released and retrieved by the UAV.

### Background of the invention

Inspecting underwater installations using present day methods is not an easy task. A vessel is manoeuvred to an approximate location of the area that needs inspecting. The vessel releases a Remotely Operated Vehicle (ROV) that is guided by an operator towards the underwater installation needing inspection. The ROV is remotely operated via an umbilical cable attached to the surface vessel. After the inspection is finished the ROV is lifted to the surface again.

An operation like this requires a lot of planning and is very costly since an entire vessel with a full crew is required in the operation. Further the operation is time consuming due to the travel time of the vessel in addition to the time used by the ROV on its mission.

A further limitation of the operation is the limited range of the ROV since it is attached to the vessel with an umbilical cable. A further drawback of this solution is that it requires an entire vessel to control only one ROV.

A subsea inspection is usually performed in several steps. The ROV is first released for an inspection of the area. The inspection can be done with a camera, but there can also be other instruments attached to the ROV if other techniques of inspection is needed than a direct visual inspection. After the inspection is finished, repair or work on the subsea installation can start. The ROV has a limited set of tools available at a time. If other equipment is needed than the ones attached to the ROV it must be raised and the tools changed before the work on the subsea installation can continue.

An entire operation like this can last for several days if not longer. If any of these operations can be made easier the cost of inspection and repair of such underwater operations can be greatly reduced.

Underwater inspections are not only limited to the civilian world, also the military needs subsea inspection and surveillance.

A modern military vessel uses mainly sonar (SOund Navigation And Ranging) to locate signs of an enemy. The most common type sonar used is an active type sonar which emits a sonic pulse and reads the reflection of the pulse as it bounces back of objects.

Sonars are typically located on the main search vessels. A problem with this solution is that once a search vessel initiates use of its sonar, it gives away its own position. Another problem is that the range of the sonar is limited to a given area around the vessel itself. This makes it necessary for the vessel to travel vast distances in search for submarines, mines, ROV's or other objects of interest of unknown location. Also having a heavy and expensive sound wave system for mapping the sea floor.

So, the common problem with these types of operation is that they are very costly, due to the cost of the equipment, the cost of the crew, the cost of planning and the cost of the fuel used by the vessel.

The application area of UAVs is quickly becoming wider and wider. UAVs are not only privately used any more, they are also used more and more commercially. The application areas are not only filming, but they can now be modified to carry equipment for inspection and surveillance both above and underneath the ocean surface. UAVs have even been developed that can go under water. However, the range of the UAVs that can be operated under the ocean surface is very limited and the time they can spend there are very short. Although the equipment attached to a UAV for subsea surveillance is only effective down to a certain level and cannot be used for detailed inspection.

In US 2018/370604 A1 it is described an UAV that is capable of delivering and picking up an AUV. In this solution the UAV has a line with a loop at the end that is placed around an antenna on the AUV. The drawback with this solution is that it is hard to place the line with the loop around the antenna on the AUV, and especially when the sea is rough. It is therefor a need for a solution that makes it easier to attach the AUV to the UAV even in rough seas.

In US 20160376000 A1 it is described a UAV that is modified to operate under water. However, there is a problem with this solution since the UAV itself is not designed for underwater use, the speed of the UAV under water is very slow and the range of operation underneath the surface is very limited.

In US 20110226174 A1 it is described a combined submersible vessel and unmanned aerial vehicle. This is a fixed wing solution that can go under water and uses a propeller for manoeuvring both in and out of the water. In addition, it has a water rocket for extra propulsion when exiting the water. Although this is a solution that presents a UAV with better working range under water and is more adapted to under water travel, it is a very complex system. It requires a ramp for launching the UAV and a complex rocket solution for exiting the water.

As seen, the problems with subsea inspection is either a very limited range under water or a very costly and time-consuming operation. If any part of this operation can be made easier, not only a lot of time and money can be saved, but it will make it easier to inspection and survey a larger area for the military.

### Summary of the invention

The present invention is set forth and characterized in the independent system claim 1 and method claim 12, while the dependent claims describe other characteristics of the invention.

To solve these problems, it is presented a UAV with a separate Autonomous Underwater Vehicle (AUV) attached to the UAV. The UAV can fly to the area of interest and release the AUV. The AUV can then do the intended surveillance operation and when finished, be picked up by the UAV. The AUV can be released either while the UAV is in flight or while the UAV is resting on the surface of the water. It is a further solution that the AUV can be released while the UAV is under water.

In one aspect, the invention is related to a system for releasing and retrieving an Autonomous Underwater Vehicle (AUV) using an Unmanned Aerial Vehicle (UAV) wherein the AUV has a frame structure attached to its outside and the UAV has a latching mechanism attached to a wire for latching on to the frame structure on the AUV.

The frame structure is comprised of mounting points mounting the frame structure to the AUV, to each mounting point there is attached at least one bar, each bar is attached in its opposing end to a circular bar, the circular bar is spaced apart from the mounting points in at least a vertical direction.

The latching mechanism comprises a central hub with an attachment point to the wire from the UAV and a motor controlling a set of arms, each arm has a rod attached to it, each rod is attached in its opposing end to the top portion of a hook, each hook is attached at a lower end to a bar, each bar is attached in a central point below the central hub making it the lower most point of the latching mechanism, the central point of the latching mechanism is attached to the central hub of the latching mechanism. The latching mechanism has at least three hooks, and the motor on the latching mechanism can turn the set of arms in a clockwise and counter clockwise direction.

Each hook can pivot around its attachment point to the bar and each rod is rotatable around its attachment point to the arm.

The movement of the arms forces the rods to rotate the hooks around the hooks attachment point to the bars.

When the latching mechanism and the frame structure is positioned correctly in accordance to each other the movement of the hooks forces the hooks to either latch onto or release the circular bar of the frame structure. The latching mechanism can be lifted and lowered by the wire being rolled on and of a spool controlled by an electric motor on the UAV.

The system according to any of the preceding claims wherein the central hub of the latching mechanism can have a communication unit configured to communicate with the AUV. Further the central hub of the latching mechanism can have a magnet.

A second aspect of the present invention is a method for releasing and retrieving an Autonomous Underwater Vehicle (AUV) using an Unmanned Aerial Vehicle (UAV) wherein the UAV has a latching mechanism comprising a central hub with an attachment point to a wire from the UAV and a motor controlling a set of arms, each arm has a rod attached to it, each rod is attached in its opposing end to the top portion of a hook, each hook is attached at a lower end to a bar, each bar is attached in a central point below the central hub making it the lower most point of the latching mechanism, the central point of the latching mechanism is attached to the central hub of the latching mechanism the method comprises the steps of: lowering the latching mechanism attached to the UAV into a frame structure attached to the outside of the AUV, rotating the set of arms attached to the motor in the central hub of the latching mechanism, pushing the rod attached to each arm by the movement of the arms, rotating the hook around its attachment point to the bar by the pushing of the rod, latching the hook onto a circular bar of the frame structure, releasing the hook from the circular bar of the frame structure my rotating the arms in the opposite direction.

### Brief description of the drawings

Fig. 1 is a side view drawing of UAVs launched from a vessel with a control centre.
Fig. 2 is a side view of a preferred embodiment of the invention wherein the UAV lowers and raises the AUV to and from the sea surface using a latching solution.
Fig. 3 is a perspective view of the latching solution connecting the UAV and the AUV.
Fig. 4 is a perspective view of the latching solution of the preferred embodiment in open state.
Fig. 5 is a perspective view of the latching solution of the preferred embodiment in closed state.
Fig. 6 is as top view of the latching solution of a preferred embodiment of the present invention.
Fig. 7 is a bottom view of the latching solution of a preferred embodiment of the present invention.
Fig. 8 is a side view drawing of an embodiment of the present invention wherein the AUV is dropped from the UAV above sea level.
Fig. 9 is a side view drawing of an embodiment of the present invention wherein the AUV is released from the UAV at sea level.
Fig. 10 is a side view drawing of an embodiment of the present invention wherein the AUV is released from the UAV under sea level.

### Detailed description

The present invention regards a system and method for detection, identification and verification of location and status of underwater objects or phenomenon of interest. The system, components and method described has onboard sensory, machine intelligence, navigation, communication, propulsion and actuation capabilities, which provides the system with capacity and capability to initiate and carry out select actions remotely controlled or autonomously. This invention could be used for detection, identification, and prolonged observation, inspection and tracking of select underwater or subsea activities or occurrences. The invention could have detection, identification and verification applications within marine-, underwater geology- oceanography, seabed mapping and other underwater scientific applications. The invention could see applications within the military underwater defence segment and within subsea oil and gas applications. Objects of interest could be: submarines, other underwater vehicles, mines and other underwater threats. It could also be used for detection, identification and verification of status of a subsea oil & gas operation event, or it could be an ideal tool for the detection, mapping (sub bottom profiling) identification and verification of a leaking subsea oil or gas installation.

By extending the range of the sonar on a vessel or a central control point 1, less time is used finding (mapping) objects of interest. This significantly improves the chances of detection and identification of foreign objects, and reduces cost, time and pollution caused by the vessel moving around large surface areas.

The invention comprises the following system components:
A combined aerial- and underwater UAV 2. This UAV 2 can fly as a regular aerial UAV 2, it also has the capability to land and float on the water surface

Attached to the dedicated underwater UAV 2 are select removable sensors and actuators which may be attached to the underwater object of interest for prolonged observation/tracking. Equipment of interest that may be left are: camera, location tracker (a Pinger - in the case of a submarine or underwater mine), gas sensor, (in the case of a leaking subsea oil & gas installation), or other devices. In the case of a pipe line mapping, one scenario or opportunity could be for the underwater UAV 2 to attach an explosive charge to the mine through magnetic or other attachment method, for safe and cost-effective elimination of subsea threats.

Subsea, at the underwater object of interest, the sensors and actuators are securely attached. A location tracker/Pinger may be used to ease returning to target.

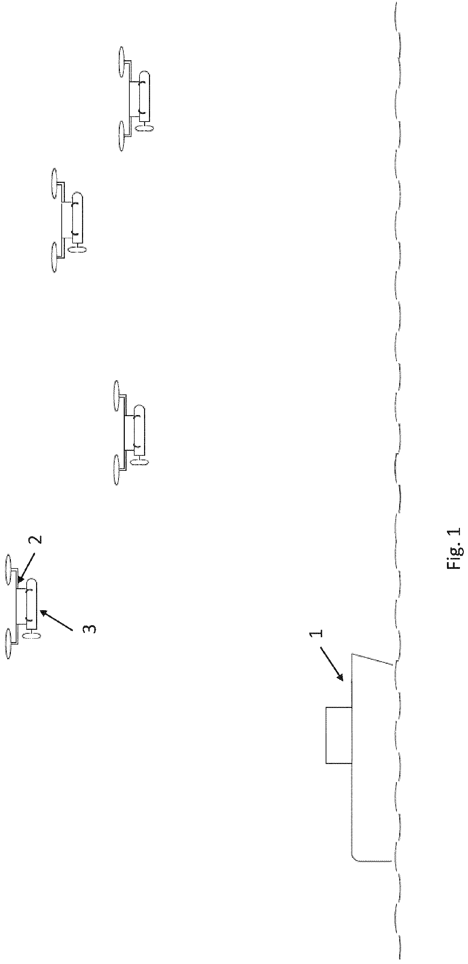

Fig. 1 is a side view drawing of UAVs 2 each carrying at least one AUV 3. The UAVs 2 carrying the AUVs 3 are launched from a central location. The central location can be either a vessel or a land-based location. The central location is regarded as a communication central.

From this central location the UAVs 2 can be controlled, and the information gathered by the UAVs 2 and the AUVs 3 is collected and interpreted here.

The UAVs 2 can be controlled via a remote-control operated by an operator. Alternatively, the UAVs 2 can be programmed to fly in predetermined patterns within designated areas relative to the central location. In yet another alternative the destination and the purpose of the mission can be programmed into the UAV 2 and AUV 3 before they are launched. This is a sort of fire and forget solution.

In a preferred embodiment the UAVs 2 and AUVs 3 can be used to transmit, in real time, information gathered by the on-board instruments to a control centre located on the central location.

The information can also be stored on board the UAV 2 and downloaded to the control centre after it has returned to the vessel.

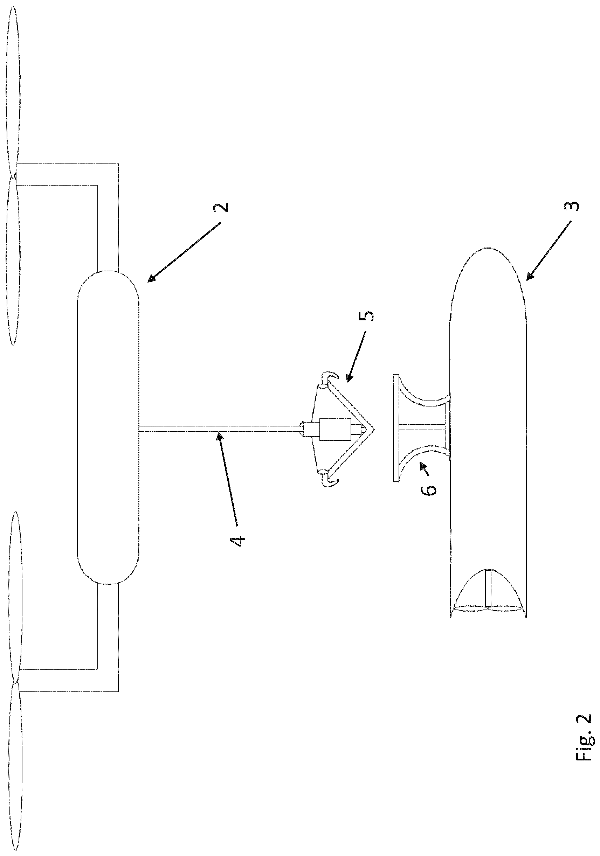

Fig. 2 is a side view of a preferred embodiment of the invention wherein the UAV 2 lowers and raises the AUV 3 to and from the sea surface using a latching solution connected to a wire 4. The wire 4 with the latching solution is connected in one end to the UAV 2. The wire 4 can be rolled on or of a spool. The rotation of the spool is controlled by an electric motor 7. The wire 4 can have electrical cables imbedded in order to transfer electric power from the UAV 2 to the latching mechanism 5 in order to control the movement of the hooks that latches on to a frame structure 6 on top of the AUV 3. To the wire 4 there is attached a motor 7. This motor 7 rotates a set of arms 8 in a clockwise and counter clockwise direction around a central axis of the latching mechanism 5. To each arm there is attached a rod 10. There are at least two arms 8 on the latching mechanism 5, preferably more. The rods 10 can rotate either way in a horizontal plane around their attachment point to the arms 8. The other end of the rod 10 is attached to a top end of a hook. The lower end of the hook 12 is attached to a bar 13. The hook can rotate around the attachment point to the bar 13. Each bar 13 is connected to the other bars 13 at the lower most end forming a point 14 like an arrow. By rotating the arms 8, the rods 10 either pull or push at the top end of the hook 11. This allows the hook to rotate around the attachment point to the bar 13.

On top of the AUV 3 there is a frame structure 6. In a preferred embodiment the frame structure 6 is comprised of a first ring 15 attaching the frame structure 6 to the top of the AUV 3. The first ring 15 can be replaced with a set of attachment points 15. The first ring 15 is attached to a circular bar 16 by a set of curved bars 17. Although the bars 17 are curved in this solution it is obvious to a person skilled in the art, that the bar 17 can be of any shape. The circular bar 16 is positioned a distance from the first ring 15 in a vertical direction when seen from the side and the AUV 3 has the frame structure 6 on top. When the latching mechanism 5 is lowered down the point 14 is lowered in to the centre of the second ring 16. The bars 13 forming the arrow like point 14 ensures that the latching mechanism 5 centres itself within the frame structure 6 on the AUV 3. The hooks on the other end of the bars 13 of the latching mechanism 5 is positioned on the circular bar 16 of the frame structure 6 when the latching mechanism 5 is correctly lowered down. When the hooks are positioned on the circular bar 16 of the frame structure 6, the motor 7 rotates the arms 8, which again pushes on the rods 10 and the hooks latches onto the circular bar 16 of the frame structure 6 attached to the AUV 3. The AUV 3 is now connected to the UAV 2. When the hooks are latched on, the UAV 2 can hoist up the AUV 3.

Further the latching mechanism 5 can comprise communication means 18 that allows the data collected by the AUV 3 to be transferred to the UAV 2 and then to the mother ship.

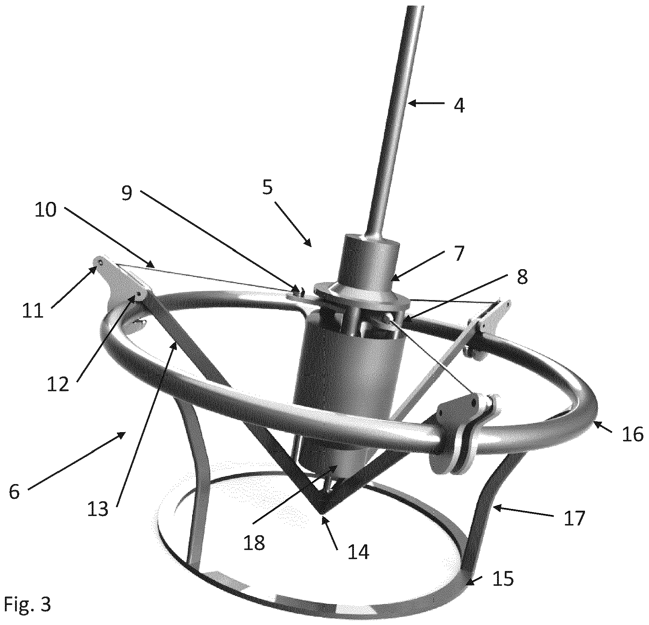

Fig. 3 is a perspective view of the latching mechanism 5 connecting the UAV 2 and the AUV 3. the latching mechanism 5 is attached to the UAV 2 by a wire 4. The wire 4 can be rolled on or of a spool. The rotation of the spool is controlled by an electric motor. The wire 4 can have electrical cables imbedded in order to transfer electric power from the UAV 2 to the latching mechanism 5 in order to control the movement of the hooks that latches on to a frame structure 6 on top of the AUV 3. To the wire 4 there is attached a motor 7. This motor 7 rotates a set of arms 8 in a clockwise and counter clockwise direction around a central hub of the latching mechanism 5.

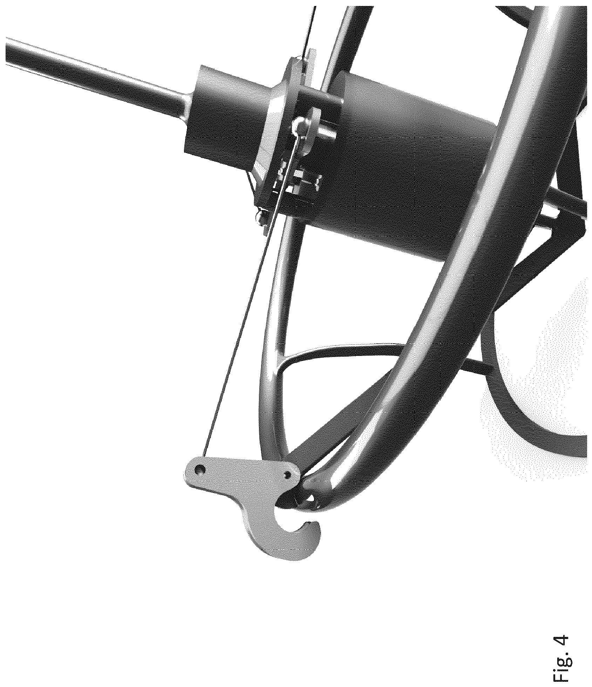

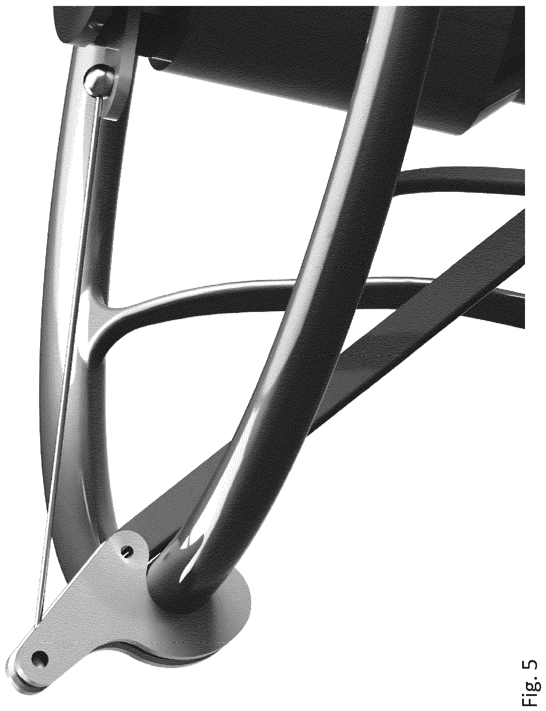

Fig. 4 and fig. 5 is respectively a perspective view of the latching solution of the preferred embodiment in an open state and in a closed state. The motor 7 can rotate the arms 8 either clockwise or counter clockwise. This rotation of the arms 8 either pushes or pulls on the rods 10. This movement of the rods 10 rotates the hooks around the hooks attachment point to the bars 13. The movement of the hooks allow the latching mechanism 5 to attach or release itself from the frame structure 6 attached to the AUV 3.

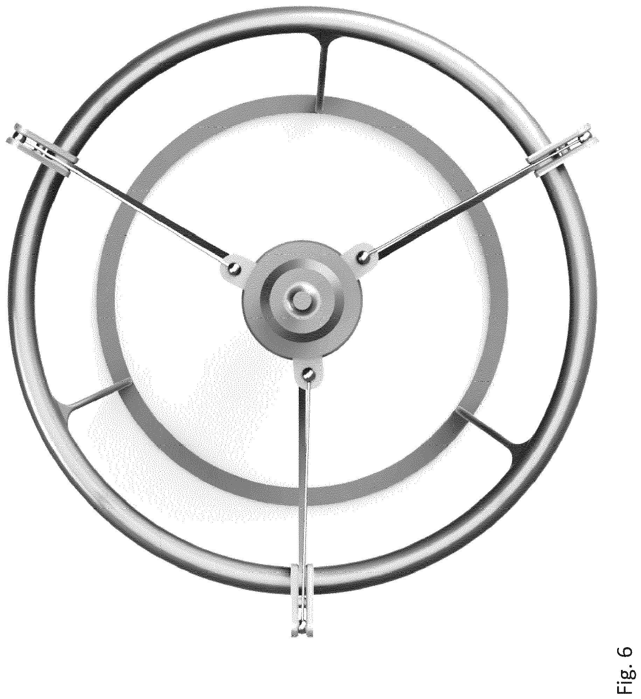

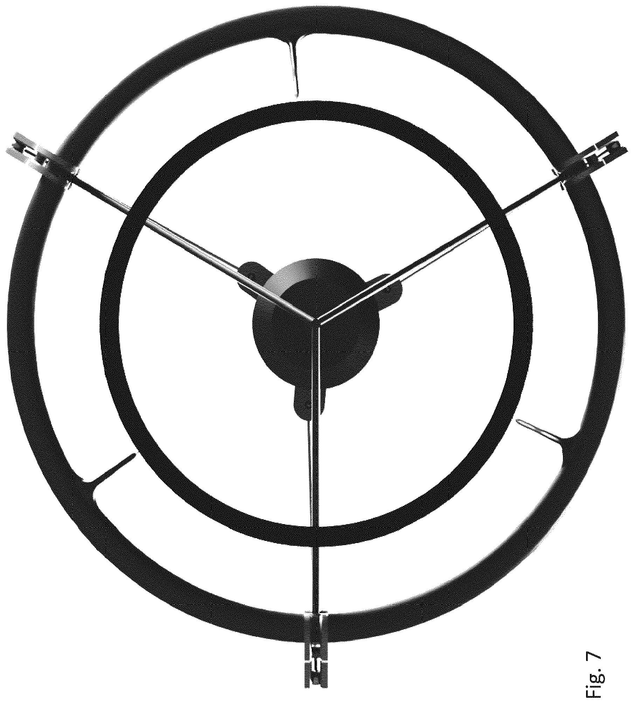

Fig. 6 and fig. 7 is respectively a top view and a bottom view of the latching mechanism 5 attached to the frame structure 6 in a preferred embodiment of the present invention. The latching mechanism 5 has a central hub to which the wire 4 connecting the latching mechanism 5 to the UAV 2 is connected. The central hub has an attachment point for the wire 4. Below that there is an electric motor 7 controlling the arms 8 that push or pull on the rods 10 that control the hooks that ensures the attachment of the latching mechanism 5 to the frame structure 6 on the AUV 3. Below the motor 7 there can be a communication device 18. The communication device 18 can be for allowing the data collected by the AUV 3 to be transferred to the UAV 2. From the UAV 2 the data can be transferred to the central control point 1 for further processing. Below the communication device 18 there is a point 14 made of the lower most ends of the bars 13 that are attached to the bottom part 12 of the hooks. The lower most point 14 is attached to the central hub.

Although the present invention is presented as having a circular frame structure 6 and three hooks, it is to be understood that the frame structure 6 can have any shape that allows the latching mechanism 5 to centre itself if it is lowered into the frame structure 6. This can be triangular, rectangular or any other amount of sides. The point is that the latching mechanism 5 centres itself if it is lowered correctly into the frame structure 6. There can also be any number for hooks. Although for stability purposes three or more hooks are preferred.

The movement of the hooks can be controlled either automatically by sensors positioned at the hooks registering the touch of the frame structure 6. Alternatively, it can be controlled by a sensor registering the tension on the wire 4 connecting the latching mechanism 5 to the UAV 2. In an even alternate solution the hooks can be controlled remotely by an operator watching via a camera.

Although the solution presented in the drawings have three hooks any number of hooks from two and up can be used without going out of the scope of the invention as it is stated in the set of claims.

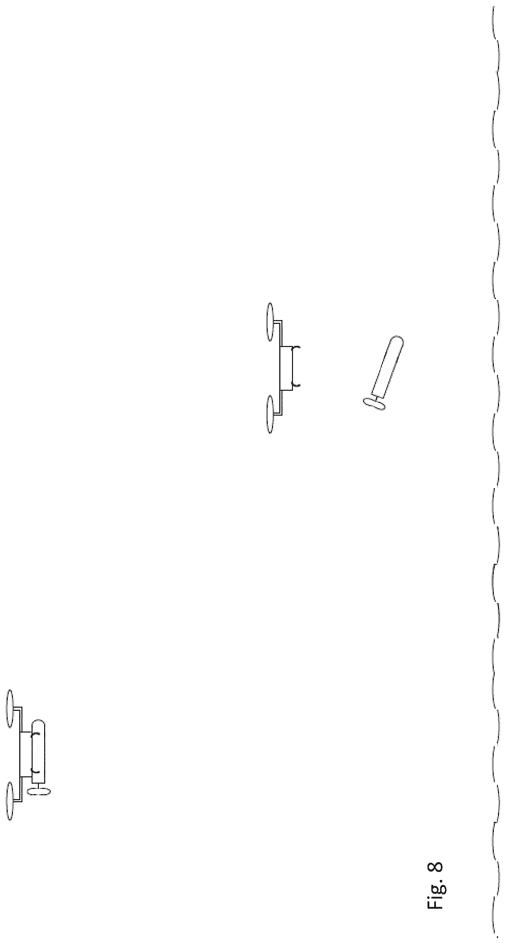

Fig. 8 is a side view drawing of an embodiment of the present invention wherein the AUV 3 is dropped from the UAV 2 above sea level. is a side view drawing of an embodiment of the present invention wherein the AUV 3 is dropped from the UAV 2 above sea level. This solution is useful if the weather is not suitable for the UAV 2 to land on the water or to go underneath sea level. Conditions like this can be e.g. in strong winds or in big waves.

A further benefit of this solution is that the AUV 3 travels through the top of the water column without using any energy. This saves energy for both the UAV 2 and the AUV 3.

A preferred solution for attaching the AUV 3 to the UAV 2 in this embodiment is to use clamps. When the UAV 2 is in place over the area of interest, the AUV 3 is released and gravity pulls the AUV 3 under water. When the AUV 3 hits the water the motor 7 on the AUV 3 propels it to its required destination.

After the AUV 3 is finished it can return to the surface and be picked up by the UAV 2. If the UAV 2 has not got enough energy to both pick up the AUV 3 and return home the control centre, the AUV 3 can be picked up by the support vessel or if possible, it can return to the support vessel on its own.

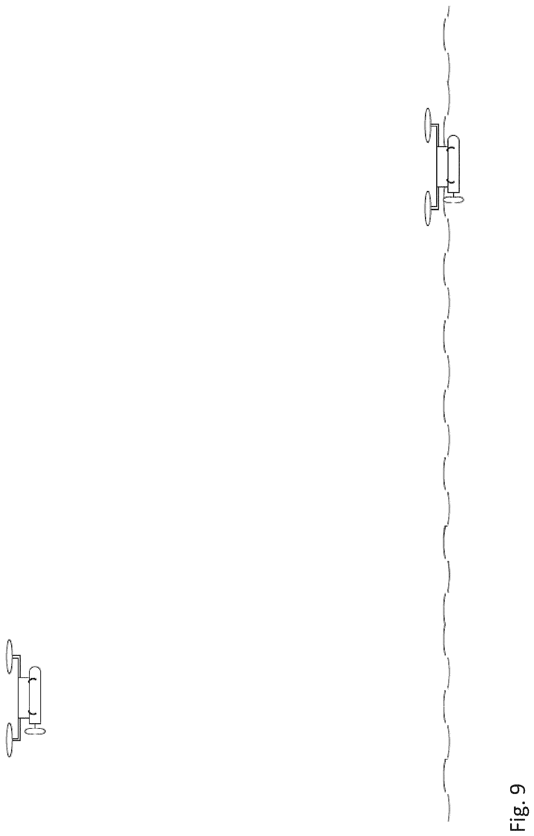

Fig. 9 is a side view drawing of an embodiment of the present invention wherein the AUV 3 is released from the UAV 2 at sea level. is a side view drawing of an embodiment of the present invention wherein the AUV 3 is released from the UAV 2 at sea level. This solution is preferable if the weather allows the UAV 2 to land on the surface of the water and take off again. This is a preferred solution since it is gentler on the AUV 3 and its onboard instruments then dropping it from a height.

When the AUV 3 is finished with its mission it returns to the surface. From there it is picked up by the UAV 2. There are several ways of attaching the AUV 3 to the UAV 2. One method is to use at least one set of clamps that holds the AUV 3 in place while it is attached to the UAV 2. This is also a method that makes it easy to release the AUV 3. Another solution is to use an electro magnet to hold the AUV 3 in place. This is a solution that is easy to use both when picking the AUV 3 up and releasing it. However, this is a heavy solution since an electromagnet strong enough to hold a AUV 3 is quite big. Using only an electro magnet to hold the AUV 3 is associated with a risk since the AUV 3 can be shaken loose.

However, by combining a clamping solution and an electromagnet makes is a preferred solution when picking up the AUV 3. The electro magnet can be used to attach the AUV 3 to the UAV 2 and the at least one clamp can be used to hold the AUV 3 in place.

Further it is possible to combine at least one of the clamps with a winching solution. This allows the UAV 2 to raise and lower the AUV 3 to release the AUV 3 or pick it up after a mission.

It is further possible to realise the combination of all three solutions. Wherein the AUV 3 is connected to the UAV 2 with the use of an electro magnet. Further the AUV 3 is held in place by at least one clamping solution. In addition, the clamping solution can be attached to a winching device. This allows for the AUV 3 to be released and picked up again after the mission is finished. The AUV 3 is lowered to the surface of the water with the winching device combined with the clamping device. When the AUV 3 has reached the water the clamping device opens and the AUV 3 is released. After the mission is finished the AUV 3 returns to the surface. The clamping device is lowered, and the electro magnet is turned on. When the magnet connects to the AUV 3, the clamping device closes around at least part of the body of the AUV 3. After the clamping device is closed the electro magnet can be shut off, and the winch can raise the clamping device and the AUV 3.

A person skilled in the art will understand that other solutions can be used, and that any combination of the solutions presented here, and other solutions can be used to attach the AUV 3 to the UAV 2.

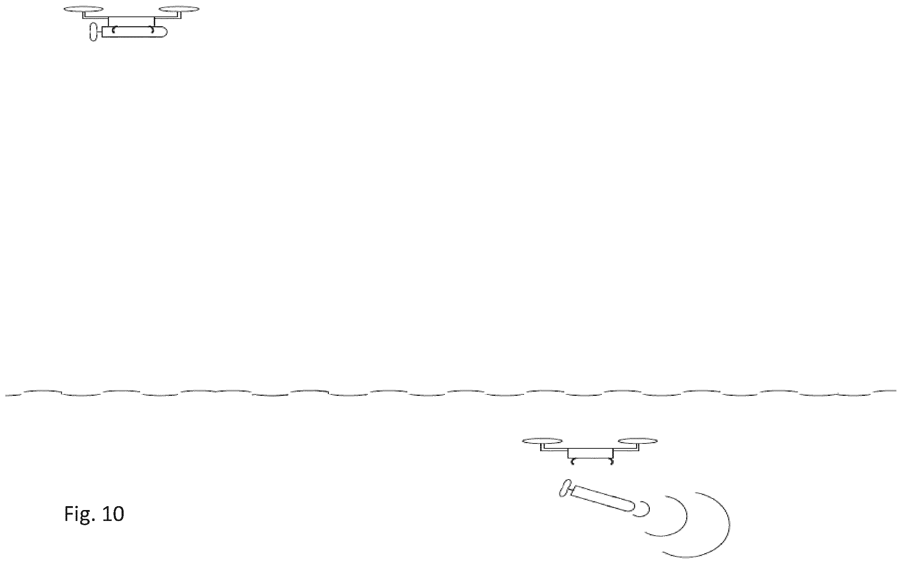

Fig. 10 is a side view drawing of an embodiment of the present invention wherein the AUV 3 is released from the UAV 2 under sea level.

In this embodiment the UAV 2 carrying the AUV 3 is adapted to go under water before releasing the AUV 3. Once the underwater UAV 2 has deployed its cargo, or otherwise completed its mission, it will propel itself back to a predetermined location at the water surface. Once the AUV 3 is released from the UAV 2, the UAV 2 may stay/float on the water surface or return to a nearby ship or installation.

After the AUV 3 has finished its mission it will be autonomously and automatically be recovered by the UAV 2. The UAV 2 with the AUV 3 will then lift off and fly back to base, radio controlled or autonomously.

The AUV 3 is equipped with a suitable sensor platform, and will perform the task of detection, mapping, identification and verification of location and status of the underwater objects or phenomenon of interest.

## Claims

1. A system for releasing and retrieving an Autonomous Underwater Vehicle (AUV 3) using an Unmanned Aerial Vehicle (UAV 2), wherein the AUV (3) has a frame structure (6) attached to its outside and the UAV (2) has a latching mechanism (5) attached to a wire (4) for latching on to the frame structure (6) on the AUV (3), the system being **characterized in that**:
the latching mechanism (5) comprises a central hub with an attachment point to the wire (4) from the UAV (2) and a motor (7) controlling a set of arms (8), each arm (8) has a rod (10) attached to it, each rod (10) is attached in its opposing end to the top portion of a hook (11), each hook is attached at a lower end (12) to a bar (13), each bar (13) is attached in a central point (14) below the central hub making it the lower most point (14) of the latching mechanism (5), the central point (14) of the latching mechanism (5) is attached to the central hub of the latching mechanism (5).

2. The system according to claim 1 wherein the frame structure (6) is comprised of mounting points mounting the frame structure (6) to the AUV (3), to each mounting point there is attached at least one bar (17), each bar (17) is attached in its opposing end to a circular bar (16), the circular bar (16) is spaced apart from the mounting points in at least a vertical direction.

3. The system according to claim 1 wherein the latching mechanism (5) has at least three hooks.

4. The system according to claim 1 wherein the motor (7) on the latching mechanism (5) can turn the set of arms (8) in a clockwise and counter clockwise direction.

5. The system according to claim 3 wherein each hook can pivot around its attachment point (12) to the bar (13).

6. The system according to claim 1 wherein each rod (10) is rotatable around its attachment point (9) to the arm (8).

7. The system according to claim 3 wherein the movement of the arms (8) forces the rods (10) to rotate the hooks around the hooks attachment point (12) to the bars (13).

8. The system according to any of the preceding claims wherein when the latching mechanism (5) and the frame structure (6) is positioned correctly in accordance to each other the movement of the hooks forces the hooks to either latch onto or release the circular bar (16) of the frame structure (6).

9. The system according to any of the preceding claims wherein the latching mechanism (5) can be lifted and lowered by the wire (4) being rolled on and of a spool controlled by an electric motor on the UAV (2).

10. The system according to any of the preceding claims wherein the central hub of the latching mechanism (5) can have a communication unit configured to communicate with the AUV (3).

11. The system according to any of the preceding claims wherein the central hub of the latching mechanism (5) can have a magnet.

12. A method for releasing and retrieving an Autonomous Underwater Vehicle (AUV 3) using an Unmanned Aerial Vehicle (UAV 2) wherein the UAV (2) has a latching mechanism (5) comprising a central hub with an attachment point to a wire (4) from the UAV (2) and a motor (7) controlling a set of arms (8), each arm (8) has a rod (10) attached to it, each rod (10) is attached in its opposing end to the top portion of a hook (11), each hook is attached at a lower end (12) to a bar (13), each bar (13) is attached in a central point (14) below the central hub making it the lower most point (14) of the latching mechanism (5), the central point (14) of the latching mechanism (5) is attached to the central hub of the latching mechanism (5) the method comprises the steps of:
• lowering the latching mechanism (5) attached to the UAV (2) into a frame structure (6) attached to the outside of the AUV (3),
• rotating the set of arms (8) attached to the motor (7) in the central hub of the latching mechanism (5),
• pushing the rod (10) attached to each arm (8) by the movement of the arms (8),
• rotating the hook around its attachment point (12) to the bar (13) by the pushing of the rod (10),
• latching the hook onto a circular bar (16) of the frame structure (6),
• releasing the hook from the circular bar (16) of the frame structure (6) my rotating the arms (8) in the opposite direction.

13. The method according to claim 12 wherein lifting or lowering the latching mechanism (5) by rolling the wire (4) on or off a spool controlled by an electric motor on the UAV (2).

## Patentansprüche

1. System zum Freigeben und Zurückholen eines autonomen Unterwasserfahrzeugs (AUV 3) unter Verwendung eines unbemannten Luftfahrzeugs (UAV 2), wobei das AUV (3) eine an seiner Außenseite befestigte Rahmenstruktur (6) aufweist und das UAV (2) einen an einem Draht (4) befestigten Verriegelungsmechanismus (5) zum Verriegeln an der Rahmenstruktur (6) an dem AUV (3) aufweist, wobei das System **dadurch gekennzeichnet ist, dass**:
der Verriegelungsmechanismus (5) eine zentrale Nabe mit einem Befestigungspunkt an dem vom UAV (2) ausgehenden Draht (4) und einem Motor (7) umfasst, der einen Satz von Armen (8) steuert, wobei jeder Arm (8) eine an ihm befestigte Stange (10) aufweist, wobei jede Stange (10) an ihrem gegenüberliegenden Ende an dem oberen Abschnitt eines Hakens (11) befestigt ist, wobei jeder Haken an einem unteren Ende (12) an einem Stab (13) befestigt ist, wobei jeder Stab (13) an einem zentralen Punkt (14) unter der zentralen Nabe befestigt ist, was ihn zum untersten Punkt (14) des Verriegelungsmechanismus (5) macht, wobei der zentrale Punkt (14) des Verriegelungsmechanismus (5) an der zentralen Nabe des Verriegelungsmechanismus (5) befestigt ist.

2. System nach Anspruch 1, wobei die Rahmenstruktur (6) aus Montagepunkten besteht, die die Rahmenstruktur (6) an dem AUV (3) montieren, wobei an jedem Montagepunkt wenigstens ein Stab (17) befestigt ist, wobei jeder Stab (17) an seinem gegenüberliegenden Ende an einem kreisförmigen Stab (16) befestigt ist, wobei der kreisförmige Stab (16) von den Montagepunkten in wenigstens einer vertikalen Richtung beabstandet ist.

3. System nach Anspruch 1, wobei der Verriegelungsmechanismus (5) wenigstens drei Haken aufweist.

4. System nach Anspruch 1, wobei der Motor (7) an dem Verriegelungsmechanismus (5) den Satz von Armen (8) im Uhrzeigersinn und gegen den Uhrzeigersinn drehen kann.

5. System nach Anspruch 3, wobei jeder Haken um seinen Befestigungspunkt (12) an dem Stab (13) schwenken kann.

6. System nach Anspruch 1, wobei jede Stange (10) um ihren Befestigungspunkt (9) an dem Arm (8) drehbar ist.

7. System nach Anspruch 3, wobei die Bewegung der Arme (8) die Stangen (10) zwingt, die Haken um den Hakenbefestigungspunkt (12) an den Stäben (13) zu drehen.

8. System nach einem der vorhergehenden Ansprüche, wobei, wenn der Verriegelungsmechanismus (5) und die Rahmenstruktur (6) in Bezug zueinander korrekt positioniert sind, die Bewegung der Haken die Haken dazu zwingt, entweder an dem kreisförmigen Stab (16) der Rahmenstruktur (6) einzurasten oder diesen freizugeben.

9. System nach einem der vorhergehenden Ansprüche, wobei der Verriegelungsmechanismus (5) angehoben und abgesenkt werden kann, indem der Draht (4) auf eine Spule, die von einem Elektromotor an dem UAV (2) gesteuert wird, aufgewickelt und von dieser abgewickelt wird.

10. System nach einem der vorhergehenden Ansprüche, wobei die zentrale Nabe des Verriegelungsmechanismus (5) eine Kommunikationseinheit aufweisen kann, die dafür ausgelegt ist, mit dem AUV (3) zu kommunizieren.

11. System nach einem der vorhergehenden Ansprüche, wobei die zentrale Nabe des Verriegelungsmechanismus (5) einen Magneten aufweisen kann.

12. Verfahren zum Freigeben und Zurückholen eines autonomen Unterwasserfahrzeugs (AUV 3) unter Verwendung eines unbemannten Luftfahrzeugs (UAV 2), wobei das UAV (2) einen Verriegelungsmechanismus (5) umfasst, der eine zentrale Nabe mit einem Befestigungspunkt an einem von dem UAV (2) ausgehenden Draht (4) und einen Motor (7) umfasst, der einen Satz von Armen (8) steuert, wobei jeder Arm (8) eine an ihm befestigte Stange (10) aufweist, wobei jede Stange (10) an ihrem gegenüberliegenden Ende an dem oberen Abschnitt eines Hakens (11) befestigt ist, wobei jeder Haken an einem unteren Ende (12) an einem Stab (13) befestigt ist, wobei jeder Stab (13) an einem zentralen Punkt (14) unter der zentralen Nabe befestigt ist, was ihn zum untersten Punkt (14) des Verriegelungsmechanismus (5) macht, wobei der zentrale Punkt (14) des Verriegelungsmechanismus (5) an der zentralen Nabe des Verriegelungsmechanismus (5) befestigt ist, wobei das Verfahren die folgenden Schritte umfasst:
• Absenken des an dem UAV (2) befestigten Verriegelungsmechanismus (5) in eine Rahmenstruktur (6), die an der Außenseite des AUV (3) befestigt ist,
• Drehen des Satzes von Armen (8), die an dem Motor (7) in der zentralen Nabe des Verriegelungsmechanismus (5) befestigt sind,
• Schieben der an jedem Arm (8) befestigten Stange (10) durch die Bewegung der Arme (8),
• Drehen des Hakens um seinen Befestigungspunkt (12) an dem Stab (13) durch das Schieben der Stange (10),
• Einrasten des Hakens an einem kreisförmigen Stab (16) der Rahmenstruktur (6),
• Lösen des Hakens von dem kreisförmigen Stab (16) der Rahmenstruktur (6) durch Drehen der Arme (8) in der entgegengesetzten Richtung.

13. Verfahren nach Anspruch 12, wobei der Verriegelungsmechanismus (5) angehoben oder abgesenkt wird, indem der Draht (4) auf eine Spule, die von einem Elektromotor an dem UAV (2) gesteuert wird, aufgewickelt oder von dieser abgewickelt wird.

## Revendications

1. Système pour libérer et récupérer un véhicule sous-marin autonome (AUV 3) à l'aide d'un véhicule aérien sans pilote (UAV 2), dans lequel l'AUV (3) comporte une structure de cadre (6) fixée à son extérieur et l'UAV (2) comporte un mécanisme de verrouillage (5) fixé à un câble (4) pour un verrouillage sur la structure de cadre (6) sur l'AUV (3), le système étant **caractérisé en ce que** :
le mécanisme de verrouillage (5) comprend un noyau central avec un point de fixation au câble (4) à partir de l'UAV (2) et un moteur (7) commandant un ensemble de bras (8), chaque bras (8) comporte une tige (10) fixée à celui-ci, chaque tige (10) est fixée par son extrémité opposée à la partie supérieure d'un crochet (11), chaque crochet est fixé au niveau d'une extrémité inférieure (12) à une barre (13), chaque barre (13) est fixée à un point central (14) en dessous du noyau central ce qui en fait le point le plus bas (14) du mécanisme de verrouillage (5), le point central (14) du mécanisme de verrouillage (5) est fixé au noyau central du mécanisme de verrouillage (5).

2. Système selon la revendication 1, dans lequel la structure de cadre (6) comprend des points de montage montant la structure de cadre (6) à l'AUV (3), à chaque point de montage est fixée au moins une barre (17), chaque barre (17) est fixée par son extrémité opposée à une barre circulaire (16), la barre circulaire (16) est espacée des points de montage dans au moins une direction verticale.

3. Système selon la revendication 1, dans lequel le mécanisme de verrouillage (5) comporte au moins trois crochets.

4. Système selon la revendication 1, dans lequel le moteur (7) sur le mécanisme de verrouillage (5) peut faire tourner l'ensemble de bras (8) dans le sens des aiguilles d'une montre et dans le sens inverse.

5. Système selon la revendication 3, dans lequel chaque crochet peut pivoter autour de son point de fixation (12) à la barre (13).

6. Système selon la revendication 1, dans lequel chaque tige (10) est rotative autour de son point de fixation (9) au bras (8).

7. Système selon la revendication 3, dans lequel le mouvement des bras (8) force les tiges (10) à entraîner en rotation les crochets autour du point de fixation (12) des crochets aux barres (13).

8. Système selon l'une quelconque des revendications précédentes, dans lequel lorsque le mécanisme de verrouillage (5) et la structure de cadre (6) sont positionnés correctement l'un par rapport à l'autre, le mouvement des crochets force les crochets soit à se verrouiller sur soit à libérer la barre circulaire (16) de la structure de cadre (6).

9. Système selon l'une quelconque des revendications précédentes, dans lequel le mécanisme de verrouillage (5) peut être soulevé et abaissé par l'embobinage et le dévidage du câble (4) sur/à partir d'un tambour commandé par un moteur électrique sur l'UAV (2).

10. Système selon l'une quelconque des revendications précédentes, dans lequel le noyau central du mécanisme de verrouillage (5) peut avoir une unité de communication configurée pour communiquer avec l'AUV (3).

11. Système selon l'une quelconque des revendications précédentes, dans lequel le noyau central du mécanisme de verrouillage (5) peut comporter un aimant.

12. Procédé pour libérer et récupérer un véhicule sous-marin autonome (AUV 3) à l'aide d'un véhicule aérien sans pilote (UAV 2), dans lequel l'UAV (2) comporte un mécanisme de verrouillage (5) comprenant un noyau central avec un point de fixation à un câble (4) à partir de l'UAV (2) et un moteur (7) commandant un ensemble de bras (8), chaque bras (8) comporte une tige (10) fixée à celui-ci, chaque tige (10) est fixée par son extrémité opposée à la partie supérieure d'un crochet (11), chaque crochet est fixé au niveau d'une extrémité inférieure (12) à une barre (13), chaque barre (13) est fixée à un point central (14) en dessous du noyau central ce qui en fait le point le plus bas (14) du mécanisme de verrouillage (5), le point central (14) du mécanisme de verrouillage (5) est fixé au noyau central du mécanisme de verrouillage (5), le procédé comprend les étapes de :
- l'abaissement du mécanisme de verrouillage (5) fixé à l'UAV (2) dans une structure de cadre (6) fixée à l'extérieur de l'AUV (3),
- la rotation de l'ensemble de bras (8) fixé au moteur (7) dans le noyau central du mécanisme de verrouillage (5),
- la poussée de la tige (10) fixée à chaque bras (8) par le mouvement des bras (8),
- la rotation du crochet autour de son point de fixation (12) à la barre (13) par la poussée de la tige (10),
- le verrouillage du crochet sur une barre circulaire (16) de la structure de cadre (6),
- la libération du crochet à partir de la barre circulaire (16) de la structure de cadre (6) par rotation des bras (8) dans la direction opposée.

13. Procédé selon la revendication 12, dans lequel le soulèvement ou l'abaissement du mécanisme de verrouillage (5) par l'embobinage ou le dévidage du câble (4) sur/à partir d'un tambour commandé par un moteur électrique sur l'UAV (2).
